# EUROPEAN PATENT APPLICATION

(11) **EP 3 508 057 A1**
(43) Date of publication of application: **10.07.2019**
(21) Application number: 17845813.9
(22) Date of filing: 06.06.2017
(51) Int. Cl.: A01K 23/00

(54) **BELT-SHAPED BODY**

(30) Priority: 31.08.2016 JP 2016170232
(71) Applicant: Unicharm Corporation, Ehime 799-0111 (JP)
(72) Inventor: YAMAMOTO, Hiroki, Kanonji-shi, Kagawa 769-1602 (JP); KOMATSUBARA, Daisuke, Kanonji-shi, Kagawa 769-1602 (JP)
(74) Representative: Staeger & Sperling Partnerschaftsgesellschaft mbB
(86) International application number: PCT/JP2017/020962
(87) International publication number: WO 2018/042802

(57) **Abstract**

The present invention provides a belt-shaped body that is worn around the torso of an animal and that detachably fixes a crotch member disposed on the crotch of the animal, wherein the crotch member does not easily detach or become displaced from the suitable position. This belt-shaped body (1) has, in plan view in a spread-out state, a longitudinal direction (L) corresponding to the direction encircling the torso of an animal, and a width direction (W) corresponding to the front-back direction of the animal, and also has an abdomen-corresponding region (A_{C}) corresponding to the abdomen of the animal and including an axis line (C_{W}) that extends in the width direction (W) and is located in the center relative to the longitudinal direction (L), and two back-corresponding regions (A₁, A₂) that correspond to the back of the animal and that are located in both portions adjacent to the abdomen-corresponding region (A_{C}) in the longitudinal direction (L). At least in the abdomen-corresponding region (A_{C}), the rigidity in the width direction (W) is higher than the rigidity in the longitudinal direction (L).

## Description

### FIELD

The present invention relates to a belt-shaped body to be used in an absorbent article for an animal, such as a disposable diaper for a pet.

### BACKGROUND

Known absorbent articles for animals, for treatment of excreta that have been excreted by a pet such as a dog or cat, include belt-shaped disposable diapers that are worn by being wrapped around the torso of the pet.

An example of such an absorbent article for an animal is the disposable diaper for a pet disclosed in PTL 1, which comprises a belt-shaped diaper main body fitted in a freely detachable manner around the torso of the pet while having an absorptive core (absorbent body) in the region corresponding to the abdominal region of the pet (the abdomen-corresponding region), and an auxiliary body that is disposed on the lower crotch region of the pet and engaged in a freely detachable manner with the diaper main body. The disposable diaper for a pet disclosed in PTL 1 is described as being able to hold pet feces by the auxiliary body that covers the crotch region of the pet.

### [CITATION LIST]

### [PATENT LITERATURE]

[PTL 1] Japanese Unexamined Patent Publication No. 2014-226111

### SUMMARY

### [TECHNICAL PROBLEM]

However, since the belt-shaped diaper main body (belt-shaped body) of the disposable diaper for a pet disclosed in PTL 1 comprises an absorbent body in the region corresponding to the abdomen of the pet, and has uniform rigidity in the directions corresponding to the front-back direction and the direction around the torso of the pet (i.e., the widthwise direction and lengthwise direction of the diaper main body), force applied in the direction corresponding to the front-back direction of the pet by activity of the pet (and especially activity of bending around the abdominal region) when the diaper main body is being worn (specifically, force applied in the direction toward the inner side in the widthwise direction of the diaper main body) causes the belt-shaped diaper main body to deform in the region corresponding to the abdomen of the pet in such a manner that it shrinks in the direction corresponding to the front-back direction of the pet (the widthwise direction of the diaper main body), producing wrinkles (i.e. irregularities in the thickness direction of the diaper main body) that run in the direction corresponding to the direction around the torso of the pet (the lengthwise direction of the diaper main body) and causing the auxiliary body (lower crotch member) that is locked onto the belt-shaped diaper main body to detach from the diaper main body, which has often resulted in leakage of excreta of the pet.

Even if, in order to avoid this situation, the rigidity of the belt-shaped diaper main body is increased so that the diaper main body is less likely to contract inward in the widthwise direction (i.e., in the direction corresponding to the front-back direction of the pet), merely increasing the rigidity of the diaper main body impedes deformation of the belt-shaped diaper main body along the torso of the pet (hampers fitting onto the torso of the pet), and therefore such belt-shaped diaper main bodies have tended to shift from the proper position together with the auxiliary body during the course of activity by the pet when they are worn (more specifically, then tend to shift in the front-back direction of the pet), resulting in leakage of excreta.

It is therefore an object of the present invention to provide a belt-shaped body for freely detachable anchoring of a lower crotch member that is to be fitted along the periphery of the torso of an animal and disposed in the lower crotch region of the animal, having the feature that the lower crotch member is unlikely to detach or to shift from the proper position.

### [SOLUTION TO PROBLEM]

One aspect (aspect 1) of the invention is a belt-shaped body that is to be fitted along the periphery of the torso of an animal for freely detachable anchoring of a lower crotch member that is disposed in the lower crotch region of the animal, wherein
the belt-shaped body has, in a plan view in an expanded state, a lengthwise direction corresponding to the direction around the torso of the animal and a widthwise direction corresponding to the front-back direction of the animal, and also has an abdomen-corresponding region that includes a center axis line in the lengthwise direction running in the widthwise direction and corresponds to the abdominal region of the animal, and two dorsal-corresponding regions located at both sections adjacent to the abdomen-corresponding region in the lengthwise direction and corresponding to the dorsal region of the animal, and
the rigidity of the belt-shaped body in the widthwise direction is higher than its rigidity in the lengthwise direction, at least in the abdomen-corresponding region.

Since the belt-shaped body of this aspect is constructed so that the rigidity in the widthwise direction is higher than the rigidity in the lengthwise direction at least in the abdomen-corresponding region, the abdomen-corresponding region of the belt-shaped body is less likely to contract in the direction corresponding to the front-back direction of the animal (i.e., wrinkles running in the direction around the torso of the animal are unlikely to form), such that the lower crotch member anchored to the belt-shaped body in a freely detachable manner is unlikely to detach from the belt-shaped body, while easily deforming along the torso of the animal in the direction around the torso of the animal (i.e., easily fitting to the torso of the animal), and the belt-shaped body and the lower crotch member anchored to the belt-shaped body in a freely detachable are unlikely to shift from the proper position. Throughout the present description, this function and effect may also be referred to simply as the "function and effect of resistance to detachment and resistance to shifting of the lower crotch member".

According to another aspect (aspect 2) of the invention, in the belt-shaped body of aspect 1, the belt-shaped body comprises a core member extending in a region including at least the abdomen-corresponding region, and an outer surface member extending from one end to the other end in the lengthwise direction of the belt-shaped body and having an anchoring surface where the lower crotch member is anchored in a freely detachable manner, and either or both the core member and the outer surface member are formed so that the rigidity in the widthwise direction is higher than the rigidity in the lengthwise direction, at least in the abdomen-corresponding region.

Of the members composing the belt-shaped body of this aspect, either or both the core member with relatively high rigidity and the outer surface member having an anchoring surface where the lower crotch member is anchored, are formed so that the rigidity in the widthwise direction is higher than the rigidity in the lengthwise direction at least in the abdomen-corresponding region, and therefore the aforementioned function and effect of resistance to detachment and resistance to shifting of the lower crotch member can be more easily and more reliably exhibited.

According to yet another aspect (aspect 3) of the invention, the core member and the outer surface member in the belt-shaped body of aspect 2 are joined.

Since the core member and outer surface member composing the belt-shaped body of this aspect are joined, the function and effect of resistance to detachment and resistance to shifting of the lower crotch member are more easily exhibited in a complementary manner by the core member and the outer surface member. Furthermore, if the core member and outer surface member are joined, the core member and outer surface member are less likely to undergo mutual positional shifting in the direction around the torso of an animal when the belt-shaped body is fitted along the torso of the animal, and therefore the belt-shaped body can be more stably and reliably fitted in a close manner to the torso of the animal, and as a result, the belt-shaped body and the lower crotch member that is anchored to the belt-shaped body can be made even less likely to shift from the proper position.

According to yet another aspect (aspect 4) of the invention, the core member and the outer surface member in the belt-shaped body of aspect 2 are not joined.

Since the core member and outer surface member composing the belt-shaped body of this aspect are not joined, then even when force is applied from the torso of the animal to the belt-shaped body by activity of the animal when the belt-shaped body is worn, the force is unlikely to be propagated to the outer surface member, and the anchored state of the outer surface member and lower crotch member of the belt-shaped body can be stably maintained. As a result, the lower crotch member anchored to the belt-shaped body in the belt-shaped body of this aspect can be made even less likely to detach.

The term "when ... worn", for the purpose of the present description, refers to the period from the point at which the belt-shaped body is fitted onto an animal (i.e., when a usable state is formed), and throughout the period in which that worn state is maintained (while it is worn).

According to yet another aspect (aspect 5) of the invention, in the belt-shaped body of any one of aspects 1 to 4, the belt-shaped body has a torso-facing surface that faces the torso of the animal when worn and a non-torso-facing surface on the opposite side from the torso-facing surface, while comprising an engaging member on the torso-facing surface at one end region in the lengthwise direction, that extends longitudinally in the widthwise direction and is able to engage with the non-torso-facing surface.

Since the belt-shaped body of this aspect comprises an engaging member on the torso-facing surface at one end region in the lengthwise direction, that extends longitudinally in the widthwise direction and is able to engage with the non-torso-facing surface, when the belt-shaped body is fitted around the torso of an animal, the one end region in the lengthwise direction of the belt-shaped body which overlaps with the other end region (i.e., on the non-torso-facing surface in the other end region) on the dorsal region of the animal can be engaged and fastened by the engaging member disposed on the torso-facing surface of the one end region. Since the belt-shaped body of this aspect is formed so that, when it is worn, the sections of the one end region and the other end region in the lengthwise direction that overlap through the engaging member extend in the widthwise direction of the belt-shaped body, the rigidity of the region corresponding to the dorsal region of the animal (the dorsal-corresponding region) in the direction corresponding to the front-back direction of the animal (i.e., the widthwise direction of the belt-shaped body) is increased, and even when the animal wearing the belt-shaped body performs actions such as bending around the abdominal region, the belt-shaped body is even less likely to bend in the direction corresponding to the front-back direction of the animal, and as a result, the abdomen-corresponding region is even less likely to contract in the direction corresponding to the front-back direction of the animal, and the lower crotch member anchored to the belt-shaped body can be made even less likely to detach.

According to yet another aspect (aspect 6) of the invention, in the belt-shaped body according to any one of aspects 1 to 5, the belt-shaped body has a rigidity reinforcing member extending in the lengthwise direction.

Since the belt-shaped body of this aspect has a rigidity reinforcing member extending in the lengthwise direction, even when force is applied in the direction corresponding to the front-back direction of the animal (i.e., the widthwise direction of the belt-shaped body) due to activity of the animal (especially activity of bending around the abdominal region) when it is worn, the rigidity reinforcing member extending in the lengthwise direction that crosses with that direction can resist the force, and as a result, the belt-shaped body is even less likely to contract in the direction corresponding to the front-back direction of the animal and the lower crotch member anchored to the belt-shaped body can be even more reliably rendered unlikely to detach.

According to yet another aspect (aspect 7) of the invention, in the belt-shaped body according to aspect 6, the rigidity reinforcing member is disposed on each of both ends in the widthwise direction of the belt-shaped body.

Since the belt-shaped body of this aspect has the rigidity reinforcing member disposed on each of both ends in the widthwise direction of the belt-shaped body, even when force is applied in the direction corresponding to the front-back direction of the animal due to activity of the animal when it is worn, both ends in the widthwise direction of the belt-shaped body that are most susceptible to application of force are unlikely to deform in a manner bending in the direction corresponding to the front-back direction of the animal, due to the rigidity reinforcing members that are disposed, and as a result, the belt-shaped body is even less likely to contract in the direction corresponding to the front-back direction of the animal and the lower crotch member anchored to the belt-shaped body can be made even less likely to detach.

According to yet another aspect (aspect 8) of the invention, in the belt-shaped body of aspect 6 or 7, the belt-shaped body has a torso-facing surface that faces the torso of the animal when worn and a non-torso-facing surface on the opposite side from the torso-facing surface, while the rigidity reinforcing members are joined on either or both the torso-facing surface and the non-torso-facing surface, and the joining sections between the rigidity reinforcing members and either or both the torso-facing surface and the non-torso-facing surface have smaller thickness and higher density than the other sections.

Since the joining sections between the rigidity reinforcing members and either or both the torso-facing surface and the non-torso-facing surface in the belt-shaped body of this aspect have smaller thickness and higher density than the other sections (i.e., the joining sections are highly rigid sections), then even when force is applied in the direction corresponding to the front-back direction of the animal due to activity of the animal when it is worn, the rigidity reinforcing members and the highly rigid joining sections cooperate to allow the force to be resisted even more strongly, and as a result, the belt-shaped body is even more reliably rendered unlikely to contract in the direction corresponding to the front-back direction of the animal, and the lower crotch member anchored to the belt-shaped body can be even more reliably rendered unlikely to detach.

### [ADVANTAGEOUS EFFECTS OF INVENTION]

According to the invention it is possible to provide a belt-shaped body wherein the lower crotch member of the absorbent article for an animal is unlikely to detach and unlikely to shift from the proper position.

### BRIEF DESCRIPTION OF DRAWINGS

FIG. 1 is a perspective view of a belt-shaped body 1 according to an embodiment of the invention.
FIG. 2 is a plan view of a belt-shaped body 1 according to an embodiment of the invention, as viewed in the thickness direction from the torso-facing surface side, in the expanded state.
FIG. 3 is a plan view of a belt-shaped body 1 according to an embodiment of the invention, as viewed in the thickness direction from the non-torso-facing surface side, in the expanded state.
FIG. 4 is a lengthwise cross-sectional end view of a belt-shaped body 1 according to an embodiment of the invention, along the center axis line C_{L} in the widthwise direction of FIG. 2.
FIG. 5 is a partial enlarged plan view of a core member 4 in a belt-shaped body 1 according to an embodiment of the invention.
FIG. 6 is a plan view of the lower crotch member 9 of an absorbent article for an animal in which the belt-shaped body of the invention can be applied, as seen from the torso-facing surface side in the thickness direction, in the expanded state.
FIG. 7 is a schematic diagram showing a belt-shaped body 1 and a lower crotch member 9 in the state fitted on a dog.

### DESCRIPTION OF EMBODIMENTS

Preferred embodiments of the belt-shaped body of the invention will now be explained in greater detail with reference to the accompanying drawings. Throughout the present description, unless otherwise specified, the concept of "viewing an object (for example, a belt-shaped body, core member or lower crotch member) on the horizontal plane in the expanded state in the thickness direction of the object, from the upper side in the vertical direction", will be referred to simply by the phrase "in the plan view".

The directions used throughout the present description are as follows, unless otherwise specified.

Throughout the present description, "lengthwise direction" refers to the "long direction of the lengths of a longitudinal object (for example, a belt-shaped body, core member or lower crotch member) in the plan view", "widthwise direction" refers to the "short direction of the lengths of a longitudinal object in the plan view", and "thickness direction" refers to the "vertical direction of an object situated on the horizontal plane in the expanded state", with the lengthwise direction, widthwise direction and thickness direction being in a mutually perpendicular relationship.

Also, throughout the present description, the concept of the "relatively proximal side in the widthwise direction of a longitudinal object (for example, a belt-shaped body) with respect to the widthwise central axis C_{L} located at the center in the widthwise direction of the object and running in the lengthwise direction" is referred to as the "inner side in the widthwise direction", and the concept of the "relatively distal side in the widthwise direction of a longitudinal object, with respect to the widthwise central axis C_{L}" is referred to as the "outer side in the widthwise direction". Similarly, the concept of the "relatively proximal side in the lengthwise direction of a longitudinal object, with respect to the lengthwise central axis C_{W} located at the center in the lengthwise direction of the object and running in the widthwise direction" is referred to as the "inner side in the lengthwise direction", and the concept of the "relatively distal side in the lengthwise direction of a longitudinal object, with respect to the lengthwise central axis C_{W}" is referred to as the "outer side in the lengthwise direction".

Also throughout the present description, the "direction in which the torso of an animal wearing the belt-shaped body extends" is referred to as "front-back direction of the animal", the "relatively proximal side with respect to the head of the animal in the front-back direction of the animal" is referred to as the "front side of the animal", and the "relatively distal side with respect to the head of the animal in the front-back direction of the animal (i.e., the relatively proximal side with respect to the gluteal region of the animal)" is referred to as the "rear side of the animal".

Moreover, throughout the present description, unless otherwise specified, the "one side that is the relatively proximal side with respect to the torso of an animal in the thickness direction of the belt-shaped body and lower crotch member, when the belt-shaped body and lower crotch member have been fitted onto the torso of the animal", is referred to as the "torso-facing surface side", the "other side that is the relatively distal side with respect to the torso of the animal in the thickness direction of the belt-shaped body and lower crotch member, when the belt-shaped body and lower crotch member have been fitted onto the torso of the animal" is referred to as the "non-torso-facing surface side", and the "surface of the torso-facing surface side" and the "surface on the non-torso-facing surface side" of the belt-shaped body and lower crotch member and of each of the members composing them (for example, the core member, inner surface member, outer surface member, top sheet, absorbent body and back sheet) are referred to as the "torso-facing surface" and "non-torso-facing surface", respectively. The "torso-facing surface" and the "non-torso-facing surface" are surfaces on mutually opposite sides.

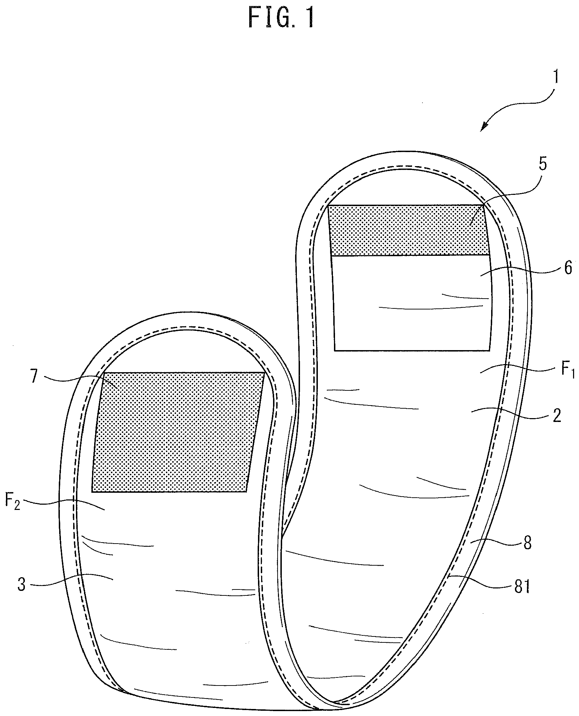

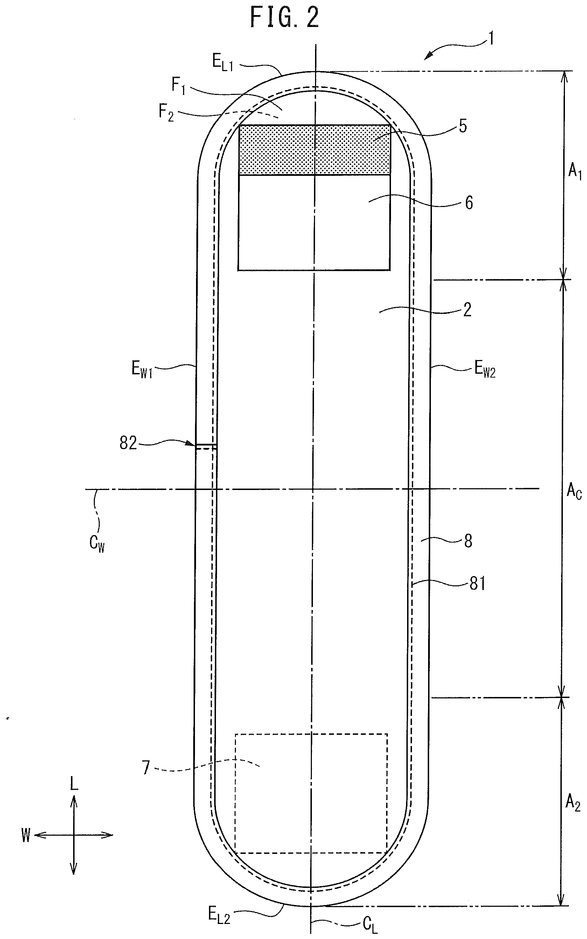

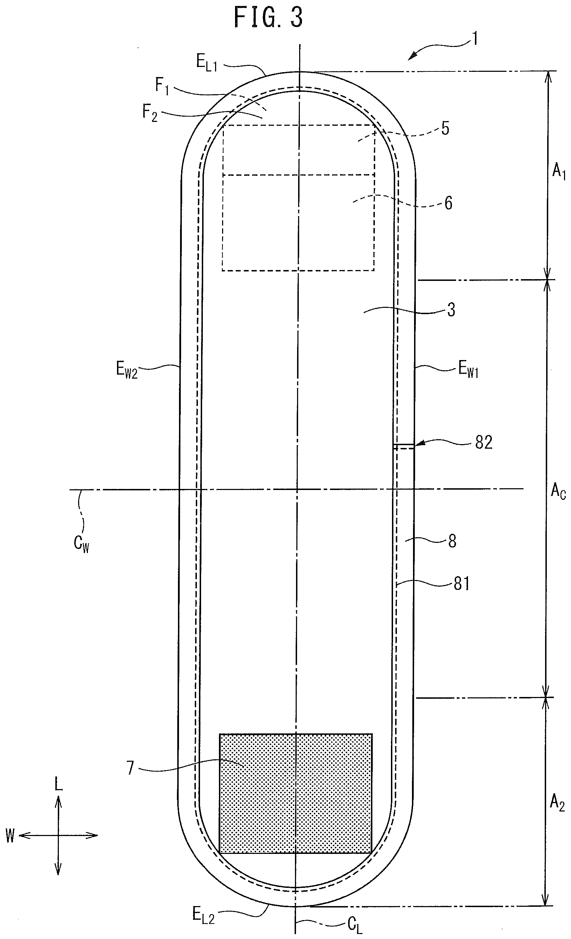

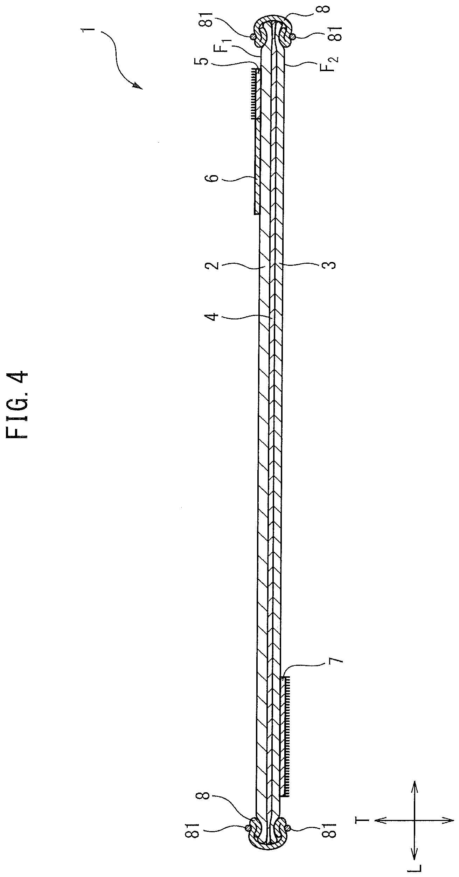

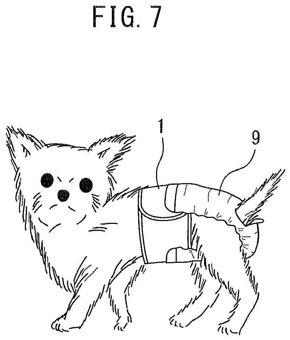

Fig. 1 is a perspective view of the belt-shaped body 1 according to an embodiment of the invention, Fig. 2 is a plan view of the belt-shaped body 1 as seen from the torso-facing surface side in the thickness direction T, in the expanded state, and Fig. 3 is a plan view of the belt-shaped body 1 as seen from the non-torso-facing surface side in the thickness direction T, in the expanded state. Fig. 4 is a lengthwise cross-sectional end view of the belt-shaped body 1 along the center axis line C_{L} in the widthwise direction W of Fig. 2, and Fig. 7 is a schematic diagram showing the state of the belt-shaped body 1 and lower crotch member 9 when fitted onto a dog.

As shown in Fig. 7, the belt-shaped body 1 according to one embodiment of the invention is a belt-shaped member fitted in a freely detachable manner along the periphery of the torso including the abdominal region and dorsal region of an animal such as a dog, while serving to anchor in a freely detachable manner the lower crotch member that is disposed in the lower crotch region of the animal (more specifically, disposed at a section from the abdominal region reaching to the dorsal region of the animal, with the lower crotch region of the animal as the center). As shown in Figs. 1 to 4, the belt-shaped body 1 has a lengthwise direction L corresponding to the direction around the torso of the animal, a widthwise direction W corresponding to the front-back direction of the animal, and a thickness direction T, and it has, in the plan view, a longitudinal outer shape wherein each of both ends in the lengthwise direction L (in the depiction of Fig. 2 and Fig. 3, one end E_{L1} and another end E_{L2} in the lengthwise direction L) protrude in an arc-shaped manner toward the outer side in the lengthwise direction L, being constructed so as to be wrapped around the periphery of the torso of the animal (i.e., so that the length in the lengthwise direction of the belt-shaped body 1 is greater than the length around the torso of the animal).

According to the invention, the outer shape and outer dimensions of the belt-shaped body are not limited to the aspect of this embodiment, and so long as it is a longitudinal outer shape having a length in the lengthwise direction that is greater than the length around the torso of the animal that is to wear it, any desired longitudinal outer shape (for example, rectangular, rounded-corner rectangular, elliptical or gourd-shaped) and outer dimensions may be employed, depending on the type, body frame and size of the animal.

As shown in Figs. 1 to 4, the belt-shaped body 1 of this embodiment has a torso-facing surface F₁ facing the torso of the animal when it is worn, and a non-torso-facing surface F₂ that is the surface on the opposite side from the torso-facing surface F₁, having an anchoring surface where the lower crotch member 9 is anchored in a freely detachable manner, while comprising, in the thickness direction T, a basic construction with an inner surface member 2 located on the torso-facing surface side of the belt-shaped body 1, that is to form the torso-facing surface F₁, an outer surface member 3 located on the non-torso-facing surface side of the belt-shaped body 1, that is to form the non-torso-facing surface F₂, and a core member 4 situated between the surface members, which imparts a prescribed rigidity to the belt-shaped body 1. For this embodiment, in the plan view, the inner surface member 2, outer surface member 3 and core member 4 each extend from one end E_{L1} to the other end E_{L2} in the lengthwise direction L of the belt-shaped body 1, while also extending from one end E_{W1} to the other end E_{W2} in the widthwise direction W of the belt-shaped body 1.

Also, as shown in Figs. 2 to 4, the belt-shaped body 1 comprises a torso-facing surface side engaging member 5 that is disposed on the torso-facing surface F₁ in one end region in the lengthwise direction L of the belt-shaped body 1 and is able to engage with the anchoring surface of the non-torso-facing surface F₂ of the belt-shaped body 1, a torso-facing surface side loop member 6 disposed on the torso-facing surface F₁ of the belt-shaped body 1 in a manner adjacent to the torso-facing surface side engaging member 5 on the inner side in the lengthwise direction L of the belt-shaped body 1, a non-torso-facing surface side engaging member 7 that is disposed on the non-torso-facing surface F₂ in the other end region in the lengthwise direction L of the belt-shaped body 1 and is able to engage with the torso-facing surface side loop member 6, and a rigidity reinforcing member 8 disposed in the outer perimeter edge section of the belt-shaped body 1 (i.e., the edge along the entire outer perimeter of the belt-shaped body 1, consisting of the one end E_{L1} and the other end E_{L2} in the lengthwise direction L and the one end E_{W1} and the other end E_{W2} in the widthwise direction W of the belt-shaped body 1), in a manner extending from the torso-facing surface F₁ to the non-torso-facing surface F₂ of the belt-shaped body 1, allowing the belt-shaped body 1 to be steadily fitted onto the torso of the animal.

Throughout the present description, the one end region in the lengthwise direction of the belt-shaped body is a region extending from one end in the lengthwise direction of the belt-shaped body (for this embodiment, the end E_{L1} depicted in Fig. 2 and Fig. 3) toward the inner side in the lengthwise direction, in the plan view, wherein the length in the lengthwise direction is within 20% of the length in the lengthwise direction of the entire belt-shaped body. The same applies for the other end region in the lengthwise direction of the belt-shaped body.

The anchoring surface is the surface where the lower crotch member is anchored in a freely detachable manner onto the non-torso-facing surface of the belt-shaped body (the surface where the abdominal region side engaging member 97 and the dorsal region side engaging member 98 disposed on the torso-facing surface F₃ of the lower crotch member 9, as described below, are to be engaged and fastened in a freely detachable manner). For this embodiment, the anchoring surface is formed by the entirety of the non-torso-facing surface F₂ of the belt-shaped body 1 other than the surface where the non-torso-facing surface side engaging member 7 and the rigidity reinforcing member 8 are disposed; however, when the belt-shaped body does not have such a non-torso-facing surface side engaging member and rigidity reinforcing member, the anchoring surface may be formed by the entirety of the non-torso-facing surface of the belt-shaped body.

Moreover, the belt-shaped body 1 has, in the plan view, an abdomen-corresponding region A_{C} that includes a lengthwise central axis C_{W} extending in the widthwise direction W and corresponds to the abdominal region of the animal, and two dorsal-corresponding regions that are located at both sections adjacent to the abdomen-corresponding region A_{C} in the lengthwise direction L and correspond to the dorsal region of the animal (one dorsal-corresponding region A₁ and the other dorsal-corresponding region A₂ in Fig. 2), and for this embodiment, the construction is such that the rigidity in the widthwise direction W is higher than the rigidity in the lengthwise direction L in each of the regions including the abdomen-corresponding region A_{C}, and the one dorsal-corresponding region A₁ and other dorsal-corresponding region A₂. The constituent feature whereby the rigidity in the widthwise direction is higher than the rigidity in the lengthwise direction may be referred to hereunder simply as "the constituent feature of a rigidity difference in the lengthwise direction and widthwise direction".

In the belt-shaped body of the invention, all of the regions including the abdomen-corresponding region and the two dorsal-corresponding regions do not need to satisfy the constituent feature of a rigidity difference in the lengthwise direction and widthwise direction, as it is sufficient if the constituent feature of a rigidity difference in the lengthwise direction and widthwise direction is satisfied in at least the abdomen-corresponding region. If the belt-shaped body of this aspect satisfies the constituent feature of a rigidity difference in the lengthwise direction and widthwise direction in at least the abdomen-corresponding region, then the abdomen-corresponding region of the belt-shaped body will be unlikely to contract in the direction corresponding to the front-back direction of the animal, and even when force is applied in the direction corresponding to the front-back direction of the animal (specifically, the direction toward the inner side in the widthwise direction of the belt-shaped body) by activity of the animal (especially activity of bending around the abdominal region) when it is worn, wrinkles running in the direction around the torso of the animal will be unlikely to form in the belt-shaped body, and the lower crotch member anchored to the belt-shaped body in a freely detachable manner can be made unlikely to detach from the belt-shaped body, while easily deforming along the torso of the animal in the direction around the torso of the animal (i.e., easily fitting to the torso of the animal), and the belt-shaped body and the lower crotch member anchored to the belt-shaped body in a freely detachable manner are unlikely to shift from the proper position.

The means for producing a rigidity difference in the lengthwise direction and widthwise direction in the belt-shaped body is not particularly restricted, and for example, a sheet material having a rigidity difference in the lengthwise direction and widthwise direction may be employed as a member (structural member) composing the belt-shaped body, or a rigidity reinforcing member with increasing rigidity in the widthwise direction of the belt-shaped body may be disposed on the belt-shaped body, or compression such as embossing running along the widthwise direction may be formed in the belt-shaped body so that the rigidity in the widthwise direction is higher than the rigidity in the lengthwise direction, or a protrusion-recess structure running along the widthwise direction may be formed in the belt-shaped body, or an engaging member having prescribed rigidity may be disposed running along the widthwise direction.

Throughout the present description, the abdomen-corresponding region and the two dorsal-corresponding regions are the regions corresponding to the abdominal region of the animal and the dorsal regions when the belt-shaped body is worn, and they are regions defined as appropriate depending on the type of animal on which it is to be fitted (for example, a dog, cat or monkey) and the type of excreta (for example, urine, feces or menstrual blood). The abdomen-corresponding region is set so as to have a length in the lengthwise direction that is approximately 2/4 of the length in the lengthwise direction of the entire belt-shaped body, while the two dorsal-corresponding regions are each set so as to have lengths in the lengthwise direction that are approximately 1/4 of the length in the lengthwise direction of the entire belt-shaped body.

The rigidity of the belt-shaped body and the members composing the belt-shaped body (for example, the core member, inner surface member and outer surface member) in the lengthwise direction and widthwise direction can be comparatively evaluated by the rigidity value (N·m²/m) measured according to the following flexural rigidity test.

The rigidity value can be obtained by cutting a test piece of a prescribed size (for example, 100 mm × 100 mm) from the member to be measured (for example, the core member, inner surface member or outer surface member), and then measuring the flexural rigidity in each direction of the test piece (i.e., the directions corresponding to the lengthwise direction and widthwise direction of the member being measured) using a KES FB-2 Pure Bending Tester (product of Kato Tech Corp.).

The rigidity values of the belt-shaped body of the invention in the lengthwise direction and widthwise direction are not particularly restricted so long as the constituent feature of a rigidity difference in the lengthwise direction and widthwise direction is satisfied at least in the abdomen-corresponding region; however, from the viewpoint of more clearly exhibiting the function and effect of resistance to detachment and resistance to shifting of the lower crotch member, the rigidity value in the lengthwise direction of the belt-shaped body is preferably in the range of 0.5 × 10⁻⁴ to 5 × 10⁻⁴ N·m²/m and the rigidity value in the widthwise direction of the belt-shaped body is preferably in the range of 3 × 10⁻⁴ to 15 × 10⁻⁴ N·m²/m.

The belt-shaped body 1 of this embodiment is fitted onto the torso of the animal in the following manner. First, the belt-shaped body 1 is set on the torso of the animal so that the lengthwise direction L matches the direction around the torso of the animal and the abdomen-corresponding region A_{C} faces the abdominal region of the animal, and is then wrapped around the torso of the animal along the periphery of the torso of the animal. At the dorsal region of the animal, one end region in the lengthwise direction L of the belt-shaped body 1 is laid over the other end region (specifically, over the non-torso-facing surface), and the torso-facing surface side engaging member 5 disposed on the torso-facing surface F₁ in the one end region is engaged with the anchoring surface on the non-torso-facing surface F₂ of the belt-shaped body 1, while the non-torso-facing surface side engaging member 7 disposed on the non-torso-facing surface F₂ in the other end region is engaged with the torso-facing surface side loop member 6 disposed on the torso-facing surface F₁ in the one end region.

With the belt-shaped body 1 thus fitted onto the torso of the animal, the lower crotch member 9 comprising a disposable diaper provided with an absorbent body 93 is then engaged and fastened onto the anchoring surfaces of the respective non-torso-facing surfaces F₂ in the abdomen-corresponding region A_{C} and the dorsal-corresponding region A₁ of the belt-shaped body 1, as shown in Fig. 7.

The "animal" to which the belt-shaped body of the invention is to be applied is not particularly restricted so long as it is an animal that can be reared, such as a pet, and it may be an animal such as a dog, as exemplified by this embodiment, or a cat or monkey. Incidentally, the "excreta" to be absorbed and held by the absorbent article for an animal to which the belt-shaped body of the invention is applied (for example, a disposable diaper) are not particularly restricted so long as they can be absorbed and held in the absorbent body of the absorbent article for an animal, and for example, they may be various types of excreta such as urine or feces, or blood.

Each of the members forming the belt-shaped body of the invention will now be explained in detail using the belt-shaped body 1 according to the embodiment described above.

### [Inner surface member]

As shown in Fig. 2 and Fig. 4, the inner surface member 2 of the belt-shaped body 1 of this embodiment is composed of a flexible sheet material that has, in the plan view, a longitudinal outer shape that extends from one end E_{L1} across to the other end E_{L2} in the lengthwise direction L of the belt-shaped body 1 while extending from one end E_{W1} across to the other end E_{W2} in the widthwise direction W (more specifically, a longitudinal outer shape wherein each of both ends in the lengthwise direction L protrudes in an arc-shaped manner toward the outer side in the lengthwise direction L), and is disposed at a location on the torso-facing surface side in the thickness direction T of the belt-shaped body 1, so as to be able to directly contact the body of the animal on which it is worn.

According to the invention, the flexible sheet material that may be used as the inner surface member is not particularly restricted so long as it has prescribed flexibility allowing it to be used as an inner surface member for the belt-shaped body to be used in the absorbent article for an animal, and any of various sheet materials may be employed including nonwoven fabrics such as felt or fleece; woven fabrics; knitted fabrics such as a mesh materials; natural leather; synthetic leather; or resin sheets such as polyolefin or polyester sheets; however, from the viewpoint of flexibility, air permeability, feel on the skin, ease of care (easy washability) and strength, it is preferred to use a fiber sheet such as a nonwoven fabric, woven fabric or knitted fabric. When the flexible sheet material is such a fiber sheet, the constituent fibers are not particularly restricted, and any fibers such as synthetic fibers (such as polyester fiber or nylon fiber), natural fibers (such as cotton or silk), regenerated fibers (such as rayon or cupra) or semisynthetic fibers (such as acetate fibers) may be used, such fibers being used alone, or any two or more different types of fibers being used in combination.

Also according to the invention, the structure of the flexible sheet material that may be used as the inner surface member is not particularly restricted, and it may be a flat, nonporous sheet material, or it may be a perforated sheet material or a sheet material having a protrusion-recess structure (for example, a protrusion-recess structure or ridge-groove structure with an undulating cross-sectional shape). The flexible sheet material may be either a sheet material with a monolayer structure or a sheet material with a multilayer structure.

The dimensional shape and thickness of the flexible sheet material is not particularly restricted so long as the flexible sheet material can function as an inner surface member for a belt-shaped body, and any desired dimensional shape and thickness may be employed depending on the desired flexibility, air permeability, feel on the skin and strength.

If the core member is also able to function as an inner surface member for the belt-shaped body, the belt-shaped body does not need to comprise an inner surface member as described above.

### [Core member]

The core member that may be used in the belt-shaped body of the invention will now be explained.

The core member 4 in the belt-shaped body 1 according to one embodiment of the invention is composed of a rigid sheet material that has, in the plan view, the same longitudinal outer shape as the inner surface member 2, that extends from one end E_{L1} across to the other end E_{L2} in the lengthwise direction L of the belt-shaped body 1 while extending from one end E_{W1} across to the other end E_{W2} in the widthwise direction W, and is disposed at a location further toward the non-torso-facing surface side than the inner surface member 2 in the thickness direction T of the belt-shaped body 1 (more specifically, a location between the inner surface member 2 and the outer surface member 3), being able to impart a prescribed rigidity or strength to the belt-shaped body 1.

According to the invention, the rigid sheet material that may be used as the core member is not particularly restricted so long as it has prescribed rigidity allowing it to be used as a core member for the belt-shaped body to be used in the absorbent article for an animal, and any of various sheet materials may be employed including nonwoven fabrics such as plain weave fabrics; woven fabrics; knitted fabrics such as mesh materials; natural leather; synthetic leather; or resin sheets such as polyolefin or polyester sheets; however, from the viewpoint of rigidity, consistent flexibility, air permeability and strength, it is preferred to use a fiber sheet such as a woven fabric, nonwoven fabric or knitted fabric, while from the viewpoint of easier formation of the rigidity difference in the lengthwise direction and widthwise direction, it is preferred to use a woven fabric.

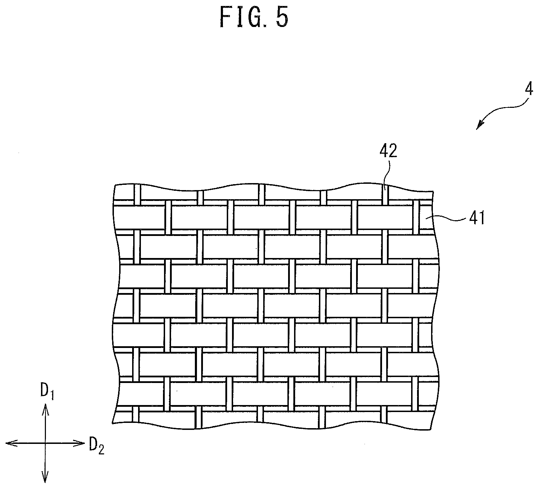

Fig. 5 is a partial enlarged plan view of a core member 4 in a belt-shaped body 1 according to this embodiment.

The core member 4 of this embodiment is constructed of a plain weave fabric as shown in Fig. 5, and the plain weave fabric has the weft yarn 41 that runs in the second direction D₂ corresponding to the widthwise direction W of the belt-shaped body 1 constructed of thicker yarn than the warp yarn 42 that runs in the first direction D₁ corresponding to the lengthwise direction L of the belt-shaped body 1. Thus, the core member 4 comprising the plain weave fabric has higher rigidity in the second direction D₂ (the direction corresponding to the widthwise direction W of the belt-shaped body 1) than the rigidity in the first direction D₁ (the direction corresponding to the lengthwise direction L of the belt-shaped body 1).

The rigidity values of the belt-shaped body of the invention in the first direction (the direction corresponding to the lengthwise direction of the belt-shaped body) and the second direction (the direction corresponding to the widthwise direction of the belt-shaped body) of the core member are not particularly restricted; however, from the viewpoint of more clearly exhibiting the function and effect of resistance to detachment and resistance to shifting of the lower crotch member, the rigidity value in the first direction of the core member is preferably in the range of 0.5 × 10⁻⁴ to 3 × 10⁻⁴ N·m²/m and the rigidity value in the second direction of the core member is preferably in the range of 3 × 10⁻⁴ to 12 × 10⁻⁴ N·m²/m.

According to the invention, the means for imparting a rigidity difference in the lengthwise direction and widthwise direction to the core member is not limited to this embodiment, and for example, a plain weave fabric having the weft yarn running in the second direction (widthwise direction of the belt-shaped body) formed of a material with a higher rigidity than the warp yarn running in the first direction (lengthwise direction of the belt-shaped body); a woven fabric that has been woven in such a manner that the rigidity of the second direction is higher than the rigidity in the first direction, due to the woven texture (manner of weaving); a woven fabric or nonwoven fabric that has been subjected to compression treatment such as embossing that extends in the second direction, so that the rigidity in the second direction is higher than the rigidity in the first direction; a nonwoven fabric having a protrusion-recess structure formed running along the second direction; or a uniaxially stretched resin sheet that has been stretched only in the second direction, may be employed as the core member to obtain a core member having a rigidity difference in the lengthwise direction and widthwise direction.

When the rigid sheet material is a fiber sheet such as a woven fabric, the constituent fibers are not particularly restricted, and any fibers such as synthetic fibers (including polyester fibers or nylon fibers), natural fibers (such as cotton or silk), regenerated fibers (such as rayon or cupra) or semisynthetic fibers (such as acetate fibers) may be used, such fibers either being used alone, or any two or more different types of fibers being used in combination.

Also according to the invention, the structure of the rigid sheet material that may be used as the core member is not particularly restricted, and it may be, instead of a woven fabric, a flat, nonporous sheet material, or a perforated sheet material or a sheet material having a protrusion-recess structure (for example, a protrusion-recess structure or ridge-groove structure with an undulating cross-sectional shape). The rigid sheet material may be either a sheet material with a monolayer structure or a sheet material with a multilayer structure.

According to the invention, the dimensional shape and thickness of the rigid sheet material is not particularly restricted so long as the rigid sheet material can function as a core member for a belt-shaped body, and any dimensional shape and thickness may be employed depending on the desired rigidity, flexibility and air permeability; however, preferably the rigid sheet material (core member) has a dimensional shape that can extend in a region of the belt-shaped body that includes at least the abdomen-corresponding region of the belt-shaped body. Of the members composing the belt-shaped body, if the core member with relatively high rigidity is formed so as to extend at least in the abdomen-corresponding region of the belt-shaped body, and so that the rigidity in the second direction (the widthwise direction of the belt-shaped body) is higher than the rigidity in the first direction (the lengthwise direction of the belt-shaped body), then the aforementioned function and effect of resistance to detachment and resistance to shifting of the lower crotch member can be more easily and more reliably obtained.

Incidentally, when the belt-shaped body satisfies the constituent feature of a rigidity difference in the lengthwise direction and widthwise direction for the belt-shaped body as a whole, according to the invention, the core member does not necessarily need to have the rigidity difference in the lengthwise direction and widthwise direction, depending on the structural members other than the core member (for example, the outer surface member, engaging member and rigidity reinforcing member).

### [Outer surface member]

The outer surface member that may be used in the belt-shaped body of the invention will now be explained.

As shown in Fig. 3 and Fig. 4, the outer surface member 3 of the belt-shaped body 1 of this embodiment is composed of an engaging sheet material that has, in the plan view, the same longitudinal outer shape as the inner surface member 2 and core member 4, that extends from one end E_{L1} across to the other end E_{L2} in the lengthwise direction L of the belt-shaped body 1 while extending from one end E_{W1} across to the other end E_{W2} in the widthwise direction W, and that is disposed at a location on the non-torso-facing surface side (specifically, a location further toward the non-torso-facing surface side than the core member 4) in the thickness direction T of the belt-shaped body 1, and is able to be engaged by the abdominal region side engaging member 97 and dorsal region side engaging member 98 disposed on the torso-facing surface F₃ of the lower crotch member 9 (described below), and the torso-facing surface side engaging member 5 disposed on the torso-facing surface F₁ in the one end region in the lengthwise direction L of the belt-shaped body 1.

According to the invention, the engaging sheet material that may be used as the outer surface member has a prescribed engaging structure (for example, a loop structure or a fiber aggregate structure having prescribed fiber lengths and interfiber distances) which allows different engaging members to engage with the anchoring surface of the non-torso-facing surface, and it is not particularly restricted so long as it has prescribed flexibility and strength allowing it to be used as an outer surface member for the belt-shaped body to be used in the absorbent article for an animal: for example, it may be a sheet-like loop material composed of a knitted fabric having a base and a plurality of loop sections integrally formed by synthetic fibers; a sheet-like loop material comprising a molded article having a base section and a plurality of loop sections integrally formed by a synthetic resin such as polyester; or a sheet material such as a nonwoven fabric; however, from the viewpoint of easier engagement with different engaging members, as well as engaging strength and flexibility, it is preferred to use a sheet-like loop material having a base and a plurality of loop sections.

For this embodiment, the outer surface member 3 is composed of a sheet-like loop material having a base and a plurality of loop sections, the loop material being formed so that the rigidity in the second direction (the direction corresponding to the widthwise direction W of the belt-shaped body 1) is higher than the rigidity in the first direction (the direction corresponding to the lengthwise direction L of the belt-shaped body 1).

The rigidity values of the belt-shaped body of the invention in the first direction (the direction corresponding to the lengthwise direction of the belt-shaped body) and the second direction (the direction corresponding to the widthwise direction of the belt-shaped body) of the outer surface member are not particularly restricted; however, from the viewpoint of more clearly exhibiting the function and effect of resistance to detachment and resistance to shifting of the lower crotch member, the rigidity value in the first direction of the outer surface member is preferably in the range of 0.001 × 10⁻⁴ to 0.3 × 10⁻⁴ N·m²/m and the rigidity value in the second direction of the outer surface member is preferably in the range of 0.001 × 10⁻⁴ to 0.5 × 10⁻⁴ N·m²/m.

According to the invention, the means for imparting a rigidity difference in the lengthwise direction and widthwise direction to the outer surface member is not particularly restricted, and an outer surface member having the aforementioned rigidity difference in the lengthwise direction and widthwise direction can be obtained if the outer surface member used is, for example, a loop material wherein rows of a plurality of loop sections aligned in the second direction (the widthwise direction of the belt-shaped body) are arranged as a plurality of rows across prescribed intervals in the first direction (the lengthwise direction of the belt-shaped body); a loop material having a base formed so that the rigidity in the second direction is higher than the rigidity in the first direction; a nonwoven fabric that has been subjected to compressing treatment such as embossing that extends in the second direction, so that the rigidity in the second direction is higher than the rigidity in the first direction; or a nonwoven fabric having a protrusion-recess structure formed running along the second direction.

When the engaging sheet material that can be used as the outer surface member of the belt-shaped body is a sheet-like loop material comprising such a molded article, the constituent material is not particularly restricted and may be, for example, a synthetic resin such as a polyester or polyolefin, either as a single type of synthetic resin, or two or more of such resins in combination.

When the engaging sheet material is composed of a sheet-like loop material made of a knitted fabric or nonwoven fabric as described above, the constituent fibers are not particularly restricted, and any fibers such as synthetic fibers (including polyester fibers or nylon fibers), natural fibers (such as cotton or silk), regenerated fibers (such as rayon or cupra) or semisynthetic fibers (such as acetate fibers) may be used, the fibers either being used alone, or any two or more different types of fibers being used in combination.

According to the invention, the dimensional shape and thickness of the engaging sheet material is not particularly restricted so long as the engaging sheet material can function as an outer surface member for a belt-shaped body, and any dimensional shape and thickness may be employed depending on the desired rigidity, flexibility and air permeability; however, preferably the engaging sheet material (outer surface member) has a dimensional shape that can extend from the one end across to the other end in the lengthwise direction of the belt-shaped body. If the outer surface member having an anchoring surface on which the lower crotch member of the absorbent article for an animal is to be anchored extends from one end across to the other end in the lengthwise direction, including the abdomen-corresponding region of the belt-shaped body, and the rigidity in the second direction (the widthwise direction of the belt-shaped body) is higher than the rigidity in the first direction (the lengthwise direction of the belt-shaped body), then the aforementioned function and effect of resistance to detachment and resistance to shifting of the lower crotch member can be more easily and more reliably obtained.

Incidentally, when the belt-shaped body satisfies the constituent feature of a rigidity difference in the lengthwise direction and widthwise direction for the belt-shaped body as a whole, as according to the invention, the outer surface member does not necessarily need to have the rigidity difference in the lengthwise direction and widthwise direction, depending on the structural members other than the outer surface member (for example, the core member, engaging member and rigidity reinforcing member).

Moreover, so long as the engaging sheet material to be used as the outer surface member for the invention has a prescribed engaging structure allowing it to engage with at least the engaging members of the lower crotch member (i.e., the abdominal region side engaging member and the dorsal region side engaging member) on the anchoring surface of the non-torso-facing surface side, then the other sections may be constructed of any desired sheet material (for example, the same fiber sheet as the inner surface member), or the engaging sheet material may be constructed of a laminated sheet comprising a sheet material having an engaging structure that is able to form an anchoring surface on the non-torso-facing surface side, and any desired sheet material.

When the anchoring part of the lower crotch member (i.e., the section for freely detachable anchoring to the belt-shaped body) is constructed of a member other than the engaging members (abdominal region side engaging member and dorsal region side engaging member) (for example, a pressure-sensitive adhesive section such as adhesive tape), the outer surface member does not necessarily have to be an engaging sheet material, and any desired sheet material (for example, the same flexible sheet material as the inner surface member) may be employed.

If either or both the core member and the outer surface member is formed so that the rigidity in the widthwise direction of the belt-shaped body is higher than the rigidity in the lengthwise direction, at least in the abdomen-corresponding region of the belt-shaped body, then the core member and outer surface member may be mutually joined by any desired joining means such as a hot-melt adhesive, or they may be unjoined.

When the core member and outer surface member are mutually joined, the function and effect of resistance to detachment and resistance to shifting of the lower crotch member is more easily exhibited in a complementary manner for the core member and the outer surface member, while the core member and outer surface member are also less likely to undergo mutual positional shifting in the direction around the torso of an animal when the belt-shaped body is fitted along the torso of the animal, and therefore the belt-shaped body can be more stably and reliably fitted in a close manner to the torso of the animal, so that as a result, the belt-shaped body and the lower crotch member that is anchored to the belt-shaped body can be made even less likely to shift from the proper position.

When the core member and outer surface member are not joined, on the other hand, force that is applied from the torso of the animal to the belt-shaped body by activity of the animal when the belt-shaped body is worn is still unlikely to be propagated to the outer surface member, and therefore the anchored state of the outer surface member and lower crotch member of the belt-shaped body can be stably maintained, and as a result, the lower crotch member anchored to the belt-shaped body can be made even less likely to detach.

### [Engaging members]

Each of the engaging members to be used in the belt-shaped body of the invention will now be explained.

As shown in Figs. 2 to 4, the belt-shaped body 1 of this embodiment comprises, as anchoring means to maintain the state of the belt-shaped body 1 fitted onto the torso of the animal, a torso-facing surface side engaging member 5 that is disposed on the torso-facing surface F₁ in one end region in the lengthwise direction L of the belt-shaped body 1 and is able to engage with the anchoring surface of the non-torso-facing surface F₂ of the belt-shaped body 1, and a non-torso-facing surface side engaging member 7 that is disposed on the non-torso-facing surface F₂ in the other end region in the lengthwise direction L of the belt-shaped body 1 and is able to engage with the torso-facing surface side loop member 6 on the torso-facing surface F₁ of the belt-shaped body 1, these engaging members having essentially rectangular outer shapes that extend longitudinally in the widthwise direction W of the belt-shaped body 1.

As shown in Fig. 4, the torso-facing surface side engaging member 5 of this embodiment has a base disposed on the torso-facing surface F₁ of the inner surface member 2 and a plurality of engaging protrusions protruding from the base to the torso-facing surface side, with each of the plurality of engaging protrusions having a shaft portion running from the base toward the torso-facing surface side, and at the end of the shaft portion (specifically, the end of the shaft portion located at the opposite side from the base), a widening portion expanding in the direction in which the outer peripheral surface of the shaft portion widens. The non-torso-facing surface side engaging member 7 has a construction similar to the torso-facing surface side engaging member 5.

The engaging member to be used in the belt-shaped body of the invention is not limited to such a specific construction, and a hook material having any desired structure may be used, although preferably the engaging member used has the specific structure described above. If the engaging member has such a specific construction, then when the engaging member has been engaged and fastened onto the anchoring surface on the non-torso-facing surface of the belt-shaped body or the torso-facing surface side loop member on the torso-facing surface, even if the engaged and fastened portion is pulled in different directions by activity of the animal, the engaging member is able to engage with the anchoring surface or torso-facing surface side loop member in response to forces in different directions on the anchoring surface or torso-facing surface side loop member, such that the state of engagement between the engaging member and the anchoring surface or torso-facing surface side loop member can be firmly maintained, and as a result the belt-shaped body is even less likely to shift from the proper position of the torso of the animal and unlikely to detach from the torso of the animal. In addition, since the engaging member having such a specific structure can engage with any fiber structure even if it is not a loop material with a specific engaging structure (for example, a nonwoven fabric or knitted fabric), there is no need to form the anchoring surface of a prescribed loop material and no need to provide the torso-facing surface side loop member, thereby allowing various product designs to be realized for different types of product concepts designed for resource savings, cost reduction or aesthetics.

Furthermore, according to the invention, the location where the engaging member (torso-facing surface side engaging member and non-torso-facing surface side engaging member) are disposed is not particularly restricted so long as the one end region and the other end region in the lengthwise direction of the belt-shaped body when the belt-shaped body is being worn are located so as to be overlapping in the thickness direction through the engaging member, and they may be disposed at any desired location, in consideration of easy fitting of the belt-shaped body and firm engagement.

Incidentally, providing the belt-shaped body with such an engaging member is not an essential constituent feature for the invention, and any desired bonding means such as a button and button hole or a tightening string, for example, may be employed as the anchoring means; however, the belt-shaped body is preferably provided with an engaging member that extends longitudinally in the widthwise direction on the torso-facing surface at least in the one end region in the lengthwise direction, as in the embodiment described above. If the belt-shaped body is provided with such an engaging member (i.e., a torso-facing surface side engaging member), then when the belt-shaped body is fitted around the torso of an animal, one end region in the lengthwise direction of the belt-shaped body can be engaged and fastened while overlapping with the top of the other end region (i.e., on the non-torso-facing surface of the other end region) at the dorsal region of the animal, by an engaging member disposed on the torso-facing surface of the one end region, and therefore the belt-shaped body provided with such a torso-facing surface side engaging member is formed so that, when it is worn, the sections of the one end region and the other end region in the lengthwise direction that overlap through the engaging member extend in the widthwise direction of the belt-shaped body and the rigidity of the region corresponding to the dorsal region of the animal in the direction corresponding to the front-back direction of the animal (i.e., the widthwise direction of the belt-shaped body) is increased, so that even when the animal wearing the belt-shaped body performs actions such as bending around the abdominal region, the belt-shaped body is even less likely to bend in the direction corresponding to the front-back direction of the animal, and as a result, the abdomen-corresponding region is even less likely to contract in the direction corresponding to the front-back direction of the animal and the lower crotch member anchored to the belt-shaped body can be rendered even less likely to detach.

The belt-shaped body of the invention preferably also comprises, in addition to the torso-facing surface side engaging member of the embodiment described above, a non-torso-facing surface side engaging member on the non-torso-facing surface in the other end region in the lengthwise direction of the belt-shaped body. If the belt-shaped body comprises such a non-torso-facing surface side engaging member, then when the belt-shaped body is worn, the non-torso-facing surface side engaging member will be engaged and fastened to the torso-facing surface in one dorsal-corresponding region of the belt-shaped body (in this case of this embodiment, the torso-facing surface side loop member 6 on the torso-facing surface F₁), and therefore the other end region in the lengthwise direction of the belt-shaped body will be less likely to curl or bend, the belt-shaped body will be able to more accurately fit the torso of the animal, and as a result, the belt-shaped body can be rendered even less likely to detach from the torso of the animal.

The constituent materials of each of the engaging members that may be used in the belt-shaped body of the invention are not particularly restricted, and any desired synthetic resins such as polyesters or polyolefins, polyamides, polyvinyl chloride, olefin-based elastomers or urethane-based elastomers, for example, may be used, such synthetic resins being single types of resins or combinations of two or more different resins. The engaging member can be produced by any molding method such as injection molding, using such synthetic resins.

The dimensional shapes and thicknesses of the different engaging members for the invention are not particularly restricted so long as the engaging members can function as the aforementioned anchoring means, and any dimensional shapes and thicknesses may be employed depending on the desired engaging strength, rigidity and flexibility.

### [Torso-facing surface side loop member]

The torso-facing surface side loop member that may be used in the belt-shaped body of the invention will now be explained.

The belt-shaped body 1 of this embodiment comprises, as anchoring means to maintain the state of the belt-shaped body 1 fitted onto the torso of the animal, a torso-facing surface side loop member 6 that is able to engage with the non-torso-facing surface side engaging member 7 disposed on the non-torso-facing surface F₂ in the other end region in the lengthwise direction L of the belt-shaped body 1, and that is disposed on the torso-facing surface F₁ in the one dorsal-corresponding region A₁ in the lengthwise direction L of the belt-shaped body 1, in a manner adjacent to the torso-facing surface side engaging member 5 on the inner side in the lengthwise direction L of the belt-shaped body 1, the torso-facing surface side loop member 6 having an essentially rectangular outer shape with a prescribed length in the lengthwise direction (length in the lengthwise direction of the belt-shaped body) and length in the widthwise direction (length in the widthwise direction of the belt-shaped body).

While providing the belt-shaped body with such a torso-facing surface side loop member is not an essential constituent feature for the invention, the belt-shaped body preferably comprises a torso-facing surface side loop member that is able to engage with the non-torso-facing surface side engaging member disposed on the non-torso-facing surface in the other end region in the lengthwise direction of the belt-shaped body, on the torso-facing surface in the one end region in the lengthwise direction of the belt-shaped body, as in the embodiment described above. If the belt-shaped body comprises such a torso-facing surface side loop member, then when the belt-shaped body is worn, the non-torso-facing surface side engaging member will be firmly engaged and fastened to the torso-facing surface side loop member disposed on the torso-facing surface in the one dorsal-corresponding region of the belt-shaped body, and therefore the other end region in the lengthwise direction of the belt-shaped body will be even less likely to undergo movement such as curling or bending, the belt-shaped body will be able to even more accurately fit the torso of the animal, and as a result, the belt-shaped body can be rendered even less likely to detach from the torso of the animal.

The torso-facing surface side loop member that may be used in the belt-shaped body of the invention is not particularly restricted so long as it can function as a complementary engaging member for the non-torso-facing surface side engaging member, and for example, the same sheet-like loop material may be used as for the outer surface member described above.

The dimensional shape and thickness of the torso-facing surface side loop member of the invention is not particularly restricted so long as it can function as a complementary engaging member for the non-torso-facing surface side engaging member, and any dimensional shape and thickness may be employed depending on the desired engaging strength, rigidity and flexibility.

### [Rigidity reinforcing member]

The rigidity reinforcing member that may be used in the belt-shaped body of the invention will now be explained.

As shown in Figs. 1 to 4, the belt-shaped body 1 of this embodiment comprises a rigidity reinforcing member 8 disposed in a manner extending from the torso-facing surface F₁ (specifically the torso-facing surface of the inner surface member 2) to the non-torso-facing surface F₂ (specifically the non-torso-facing surface of the outer surface member 3) of the belt-shaped body 1, at the outer perimeter edge section of the belt-shaped body 1 (i.e., the edge along the entire outer perimeter of the belt-shaped body 1 consisting of one end E_{L1} and the other end E_{L2} in the lengthwise direction L and one end E_{W1} and the other end E_{W2} in the widthwise direction W of the belt-shaped body 1).

While providing the belt-shaped body with such a rigidity reinforcing member is not an essential constituent feature for the invention, the belt-shaped body preferably has the rigidity reinforcing member extending in at least the lengthwise direction of the belt-shaped body, and more preferably the rigidity reinforcing member is disposed at each of both ends in at least the widthwise direction of the belt-shaped body.

If the belt-shaped body has a rigidity reinforcing member extending in at least the lengthwise direction of the belt-shaped body, then even when force is applied in the direction corresponding to the front-back direction of the animal (i.e., the widthwise direction of the belt-shaped body) due to activity of the animal when the belt-shaped body is worn, it will be able to resist the force due to the rigidity reinforcing member extending in the lengthwise direction of the belt-shaped body that crosses with the direction of force application, and as a result, the belt-shaped body will be even less likely to contract in the direction corresponding to the front-back direction of the animal and the lower crotch member anchored to the belt-shaped body will be even more reliably rendered unlikely to detach.

Furthermore, if the rigidity reinforcing member is disposed at each of both ends in at least the widthwise direction of the belt-shaped body, then even when force is applied in the direction corresponding to the front-back direction of the animal due to activity of the animal when the belt-shaped body is worn, both ends in the widthwise direction of the belt-shaped body that are most susceptible to application of force will be unlikely to bend in the direction corresponding to the front-back direction of the animal, due to the rigidity reinforcing member, and as a result, the belt-shaped body will be even less likely to contract in the direction corresponding to the front-back direction of the animal and the lower crotch member anchored to the belt-shaped body will be rendered even less likely to detach.

As shown in Figs. 2 to 4, the rigidity reinforcing member 8 of this embodiment is joined to the torso-facing surface of the inner surface member 2 and to the non-torso-facing surface of the outer surface member 3 by stitching, at the outer perimeter edge section of the belt-shaped body 1. For this embodiment, the rigidity reinforcing member 8 is disposed in a manner sandwiching a laminate of the inner surface member 2, the core member 4 and the outer surface member 3, from both the torso-facing surface side and the non-torso-facing surface side, and the rigidity reinforcing member 8, inner surface member 2, core member 4 and outer surface member 3 on the torso-facing surface side and the rigidity reinforcing member 8 on the non-torso-facing surface side are integrally joined by stitching in the thickness direction T by stitching thread 81. Thus, the integrated section of the rigidity reinforcing member 8, inner surface member 2, core member 4 and outer surface member 3 on the torso-facing surface side and the rigidity reinforcing member 8 on the non-torso-facing surface side (i.e., the joined section comprising stitched sections) have smaller thickness and higher density than the other sections of the belt-shaped body 1.

According to the invention, the rigidity reinforcing member does not need to be joined to both the torso-facing surface and the non-torso-facing surface of the belt-shaped body, as it is sufficient for it to be joined only to either the torso-facing surface or the non-torso-facing surface of the belt-shaped body; however, from the viewpoint of more reliably exhibiting the function and effect by the rigidity reinforcing member, the rigidity reinforcing member is preferably joined at both the torso-facing surface and the non-torso-facing surface of the belt-shaped body, as in this embodiment.

Furthermore, the means for joining the rigidity reinforcing member to either or both the torso-facing surface and non-torso-facing surface is not particularly restricted, and instead of stitching means, it may be any other joining means including compression means such as embossing, bonding means using a hot-melt adhesive, or heat fusion means using ultrasonic waves or the like. Of these, it is preferred to use at least one joining means from among stitching means and compression means, from the viewpoint of tending to produce joining sections between the rigidity reinforcing member and either or both the torso-facing surface and non-torso-facing surface that have smaller thicknesses and higher density than the other sections of the belt-shaped body.

If the joining sections between the rigidity reinforcing members and either or both the torso-facing surface and the non-torso-facing surface have smaller thickness and higher density than the other sections of the belt-shaped body (i.e., the joining sections have relatively higher rigidity), then even when force is applied in the direction corresponding to the front-back direction of the animal due to activity of the animal when the belt-shaped body is worn, the rigidity reinforcing members and the highly rigid joining sections will cooperate to allow the force to be resisted even more strongly, and as a result, the belt-shaped body will be even more reliably unlikely to contract in the direction corresponding to the front-back direction of the animal and the lower crotch member anchored to the belt-shaped body will be even more reliably rendered unlikely to detach.

The rigidity reinforcing member that may be used in the belt-shaped body of the invention is not particularly restricted so long as it is a belt-shaped member having constant rigidity (strength), and a belt-shaped member made of a woven fabric, nonwoven fabric, resin film or laminated sheet of two or more of these, for example, may be used. The belt-shaped member preferably has stretchability in the lengthwise direction, from the viewpoint of facilitating fitting of the belt-shaped body onto the torso of the animal. Examples of belt-shaped members having stretchability in the lengthwise direction include bias tape with interwoven urethane fiber, woven fabrics with interwoven elastic materials such as polyurethane fiber or rubber, stretchable nonwoven fabrics containing elastic materials, and net-like fabrics formed by weaving synthetic fibers or natural fibers.

The rigidity reinforcing member 8 used in the belt-shaped body 1 of this embodiment is bias tape having stretchability in the lengthwise direction. As shown in Fig. 2 and Fig. 3, the bias tape is disposed with its lengthwise direction along the outer perimeter edge section of the belt-shaped body 1, both ends of the bias tape in the lengthwise direction being stitched while mutually overlapping, to form a seam section 82.

The dimensional shape and thickness of the belt-shaped member to be used as the rigidity reinforcing member for the invention are not particularly restricted so long as it can function as the rigidity reinforcing member, and any dimensional shape and thickness may be employed depending on the desired rigidity and flexibility.

When stitching means is employed as the means for joining the rigidity reinforcing member to either or both the torso-facing surface and non-torso-facing surface, the stitching yarn used for the stitching is not particularly restricted, and yarn made of any desired fibers such as synthetic fibers (polyester fiber or nylon fiber, for example), natural fibers (cotton or silk, for example), regenerated fibers (rayon or cupra, for example) or semisynthetic fibers (such as acetate fibers) may be used.

The method of producing the belt-shaped body of the invention using each of the aforementioned members is not particularly restricted, and for example, the belt-shaped body may be produced by laminating the inner surface member, core member and outer surface member, optionally using joining means (for example, bonding means or stitching means), to obtain a laminate, and then joining the rigidity reinforcing member to the outer perimeter edge section of the laminate using any desired joining means (for example, stitching means or compression means).

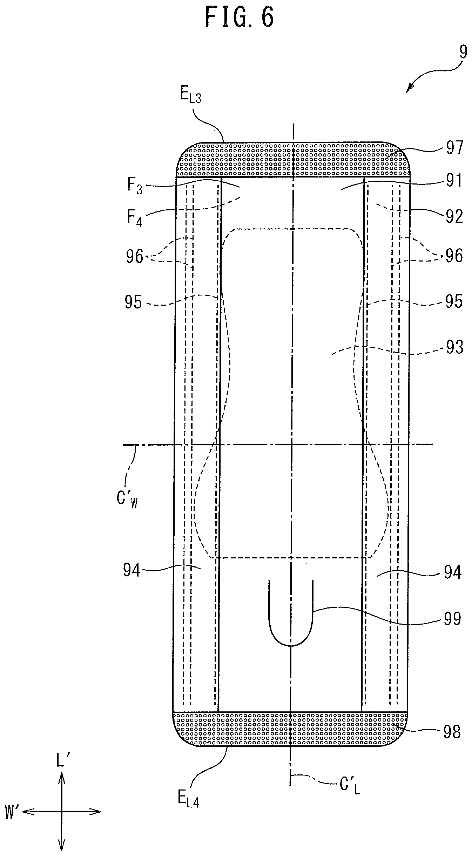

The lower crotch member of an absorbent article for an animal to which the belt-shaped body of the invention may be applied will now be described in detail. Fig. 6 is a plan view of the lower crotch member 9 of an absorbent article for an animal in which the belt-shaped body of the invention can be applied, as seen from the torso-facing surface side in the thickness direction, in the expanded state.

As shown in Fig. 7, the lower crotch member 9 is an absorbing member disposed at a location from the abdominal region to the dorsal region of an animal with the lower crotch region of the animal as the center, and it serves to absorb and hold excreta such as feces and urine that are discharged from the animal. Examples of such an absorbing member include a disposable diaper or (light) incontinence pad. As shown in Fig. 6 and Fig. 7, when it is worn, the lower crotch member 9 is used with both ends, the abdominal region side end E_{L3} located on the abdominal region side of the animal and the dorsal region side end E_{L4} located on the dorsal region side of the animal, engaged and fastened in a freely detachable with the anchoring surface of the non-torso-facing surface F₂ of the belt-shaped body 1.

As shown in Fig. 6, the lower crotch member 9 has an essentially rectangular longitudinal outer shape with a lengthwise direction L' and a widthwise direction W', in the plan view in the expanded state, and in the thickness direction, it has a first surface F₃ as the surface facing the torso of the animal (torso-facing surface) and a second surface F₄ as the surface on the side opposite the first surface F₃ (non-torso-facing surface) when the member is worn on the body of an animal.

The outer shape and outer dimensions of the lower crotch member are not particularly restricted, and any longitudinal outer shape (for example, rectangular, elliptical or gourd-shaped) and outer dimensions may be employed, depending on the type and body frame and size of the animal that is to wear it.

As shown in Fig. 6, the lower crotch member 9 comprises, as the basic construction in the thickness direction, a liquid-permeable top sheet 91 situated on the torso-facing surface side of the lower crotch member 9, a liquid-impermeable back sheet 92 situated on the non-torso-facing surface side of the lower crotch member 9, and an absorbent body 93 situated between the sheets and extending in a manner straddling in the lengthwise direction L' the lengthwise central axis C'_{W} that runs in the widthwise direction W', while extending in a manner straddling in the widthwise direction W' the widthwise central axis C'_{L} that runs in the lengthwise direction L', in the plan view of the lower crotch member 9, and it is constructed so that excreta such as feces and urine that have been discharged by the animal can be absorbed and held by the absorbent body 93 while penetrating in the thickness direction.

The lower crotch member 9 also comprises engaging members (abdominal region side engaging member 97 and dorsal region side engaging member 98) disposed on the first surface F₃ of each of both ends in the lengthwise direction L' of the lower crotch member 9 (i.e., the abdominal region side end E_{L3} and the dorsal region side end E_{L4}), a tail opening 99 for insertion of the tail of the animal, disposed at a location between the absorbent body 93 and the dorsal region side end E_{L4} in the plan view, and overlapping with the widthwise central axis C'_{L} that runs in the lengthwise direction L' of the lower crotch member 9, a pair of side sheets 94 disposed on the torso-facing surface side of the top sheet 91 and sandwiching the widthwise central axis C'_{L} that runs in the lengthwise direction L' of the lower crotch member 9, gather elastic members 95 disposed on the inner side ends in the widthwise direction W' of the side sheets 94 and running in the lengthwise direction L', and elastic members 96 disposed on the outer sides in the widthwise direction W' of the absorbent body 93, sandwiching the absorbent body 93 in the plan view, in such a manner as to allow the lower crotch member 9 to be steadily fitted onto the torso of the animal while helping to prevent outward leakage of excreta such as feces and urine that have been discharged from the animal.

The lower crotch member of the absorbent article for an animal to which the belt-shaped body of the invention may be applied is not limited to this aspect, and the belt-shaped body of the invention may be applied to any manner of lower crotch member suited for the type, body frame and size of the animal on which it is to be fitted.

Furthermore, the belt-shaped body of the invention is not restricted to the embodiments described above and can incorporate appropriate combinations, substitutions and modifications within a range that is not outside of the object and gist of the invention. Incidentally, the ordinal terms "first" and "second" as used throughout the present description serve merely to distinguish between the numbered embodiments and are not used to mean any relative ordering, precedence or importance.

### REFERENCE SIGNS LIST

1 Belt-shaped body
2 Inner surface member
3 Outer surface member
4 Core member
5 Torso-facing surface side engaging member
6 Loop member
7 Non-torso-facing surface side engaging member
8 Rigidity reinforcing member
9 Lower crotch member

## Claims

1. A belt-shaped body that is to be fitted along a periphery of a torso of an animal for freely detachable anchoring of a lower crotch member that is disposed in a lower crotch region of the animal, wherein
the belt-shaped body has, in a plan view in an expanded state, a lengthwise direction corresponding to a direction around the torso of the animal and a widthwise direction corresponding to a front-back direction of the animal, and also has an abdomen-corresponding region that includes a center axis line in the lengthwise direction running in the widthwise direction and corresponds to an abdominal region of the animal, and two dorsal-corresponding regions located at both sections adjacent to the abdomen-corresponding region in the lengthwise direction and corresponding to a dorsal region of the animal, and
a rigidity of the belt-shaped body in the widthwise direction is higher than a rigidity thereof in the lengthwise direction, at least in the abdomen-corresponding region.

2. The belt-shaped body according to claim 1, wherein
the belt-shaped body comprises a core member extending in a region including at least the abdomen-corresponding region, and an outer surface member extending from one end to the other end in the lengthwise direction of the belt-shaped body and having an anchoring surface where the lower crotch member is anchored in a freely detachable manner, and
either or both the core member and the outer surface member are formed so that a rigidity in the widthwise direction is higher than a rigidity in the lengthwise direction, at least in the abdomen-corresponding region.

3. The belt-shaped body according to claim 2, wherein the core member and the outer surface member are joined.

4. The belt-shaped body according to claim 2, wherein the core member and the outer surface member are not joined.

5. The belt-shaped body according to any one of claims 1 to 4, wherein the belt-shaped body has a torso-facing surface that faces the torso of the animal when worn and a non-torso-facing surface on an opposite side from the torso-facing surface, while comprising an engaging member on the torso-facing surface at one end region in the lengthwise direction, that extends longitudinally in the widthwise direction and is able to engage with the non-torso-facing surface.

6. The belt-shaped body according to any one of claims 1 to 5, wherein the belt-shaped body has a rigidity reinforcing member extending in the lengthwise direction.

7. The belt-shaped body according to claim 6, wherein the rigidity reinforcing member is disposed on each of both ends in the widthwise direction of the belt-shaped body.

8. The belt-shaped body according to claim 6 or 7, wherein
the belt-shaped body has a torso-facing surface that faces the torso of the animal when worn and a non-torso-facing surface on an opposite side from the torso-facing surface, while the rigidity reinforcing member is joined on either or both the torso-facing surface and the non-torso-facing surface, and
a joining section between the rigidity reinforcing members and either or both the torso-facing surface and the non-torso-facing surface has smaller thickness and higher density than other sections.
